# EUROPEAN PATENT SPECIFICATION

(11) **EP 1 602 289 B1**
(45) Date of publication and mention of the grant of the patent: **04.12.2013**
(21) Application number: 05101260.7
(22) Date of filing: 18.02.2005
(51) Int. Cl.: A23L 1/39, A23L 1/40, A23L 1/227, A23L 1/09, A23L 1/0522

(54) **Pasty composition for sauces and the like**
Pastöse Zusammensetzung für Sossen und dergleichen
Composition pâteuse pour sauces et analogues

(30) Priority: 03.06.2004 EP 04013143
(43) Date of publication of application: 07.12.2005
(73) Proprietor: Nestec S.A., 1800 Vevey (CH)
(72) Inventor: Labrunie, Thierry, 8406, Winterthur (CH); Mayer, Christel, 8307, Effretikon (CH); Mooser, Oswaldo, 8400, Winterthur (CH); Zuercher, Ulrich, 8008, Zürich (CH)
(74) Representative: Mollet, Beat Max

(56) References cited:
- EP-A- 0 012 465
- WO-A-98/42208
- US-A- 3 676 154
- US-A- 3 949 104
- US-A- 4 156 020
- US-B1- 6 376 004

## Description

The present invention concerns a chilled or shelf stable, portionable concentrated sauce composition containing non gelatinized or partially gelatinized starch and water.

The texture, unctuousness as well as the viscosity of food products like sauces, soups and gravy in simmered meals, like stew for example, are very important organoleptic features for this type of dishes.

The unctuousness of sauce and gravy are traditionally obtained by a combination of fat and polysaccharides such as starch. Cream and butter are often used for providing creaminess and bodyness while flour gives the viscosity to the mixture.
However, the preparation of unctuous sauces like bechamel is cumbersome. Indeed it involves several steps such as the preparation of a roux, i.e. heating flour in fat until desired colour is obtained, followed by addition of a liquid, then homogenization and lengthy cooking of the obtained mixture in order to produce a smooth texture as well as for gelatinizing the starch granules. This is a long and cumbersome procedure.
Regarding binding and thickening of sauces, it is known in the culinary art to add a couple of table-spoons of flour, dispersing it in the cold liquid phase, bring to the boil and simmering the mixture in order to develop viscosity and unctuousness.
Some ready-for-use binders or thickeners are available on the market. These are mainly in the form of powdery or granulated product made of non-gelatinized and/or pre-gelatinized starch agglomerated alone or with maltodextrines, fat and optionally emulsifiers.
Such products are not always easy to dissolve and often lead to the formation of lumps in the saucepan. Moreover due to their fat content, these products are not always well perceived by consumer because of nutritional and fitness concerns.

Dry-foods mixtures containing Starch are easily manufactured and distributed to the trade as well as being stable against degradation. In order to obtain the desired end product or benefit, the prescribed recipe must be followed. Also, if the consumer wishes to add further thickener in the course of the simmering of the thickened sauce, there may be some problem of lumping.

In EP 0 012 465 discloses pasteurized water-based concentrates in sealed containers. In order to minimise the swelling of the starch during pasteurisation, the osmotic pressure of the composition is increased as to obtain a water activity (aw) of 0.77 to 0.92 using a series of suitable compounds like salts, glycerol, glucose, protein hydrolysates. The disposable sealed containers (portions) are stored at room temperature until consumption. The concentrates are packaged in single-use container in order to avoid the problem of stability once the packaging is opened.

EP 0 970 619 describes ambient stable concentrates which yield, upon dilution with an aqueous liquid, a finished sauce, soup or gravy. The microbial stability is achieved here mainly by a pH of 4 or lower. Since kitchen salt is also added in a proportion of 1 % to 8 %, the accompanying lowering of the water activity also helps slightly to increase the microbial stability of the concentrate. The water activity of the examples given in EP 0 970 619 is of 0.96 to 0.98 at a kitchen salt concentration of 5 %.

Another product is known from US 3 949 104. In contrast to the above examples using hot swellable (or so called cook-up starches, e.g. native starches), US 3 949 104 describes a formulation were granular cold swellable starches (e.g. chemically modified starches) are dispersed in an aqueous dispersing system containing a swelling inhibitor. In this way, the concentrate will not thicken until it is added to a sufficient amount of water as to dissipate the inhibitor effect of the dispersing medium.

It is known to use emulsifiers to prepare soup concentrates. For example, US 6,376,004 describes a soup or sauce base comprising an emulsifier, such as egg-yolk present in the amount of between 2 and 6 %. US 6,376,004 shows that a pasty composition is formed when the amount of oil is 40 % or 60 %, but a liquid is formed when the amount of oil is 20 % of the composition.

It is also known to prepare compositions containing Maillard reaction precursors and products. See, for example, Wo 1998/042208.

The aim of the present invention is to provide a convenient concentrated sauce or pasty product that is easy to manufacture, chilled or shelfstable with or without preservatives either packaged or after opening and that can allow the reconstitution of a culinary aid, like a thick or unctuous sauce, or a liquid product, like a fonds, a juice, a fumet or the like. The dilution of the concentrated sauce or pasty product is between 20 g/l and 350g/l.

The present invention concerns a shelfstable pasty concentrated composition comprising starch dispersed in an aqueous base and an oily or fatty base,
wherein the aqueous base contains at least one dissolves a_{w} depressing agent which is sorbitol,
wherein the starch is in an unswollen state or less than 5 % in a swollen state,
wherein the starch is native starch,
wherein the composition further contains Maillard reaction components, and
wherein water is present in the amount 10 to 30 %, sorbitol is present in the amount 5 - 30 %, the starch is present in the amount 10 to 40 %, and fat or oil is present in the amount 0.1 to 30 %, such that the composition is spoonable at room temperature and at 4 °C.

According to a first embodiment of the invention, it concerns a pasty concentrated composition, which has enough viscosity when diluted and boiled after several minutes with a concentration of more than 70 g/l.

Under Maillard reaction components, we understand in the present specification components obtained through a Maillard reaction between amino acids and/or a product containing amino groups , like a meat extract and reducing sugars, like glucose or other sugars commonly used in the technique. This means that there are endogeneous compounds.

Starch that is used in the composition according to the present invention is native food starch. Suitable starch may be selected from the group comprising potato starch, maize starch, wheat starch, and rice starch used alone or in combination. Preferably, the starch used is a native potato starch.

The starch contained in the present composition is in an unswollen state, even mixed with melted fat or oil, because if swollen, it would have a too thick consistency that could prevent the optimal flowability as well as the pourability, manipulation and of course convenience of the composition. However, it is conceivable that a minor part of the starch be in a swollen state, namely less than about 5 %; depending on the amount of water, aw depressing agent and on the type of packaging used. Thus, the remainder of - or all - the starch of the composition will be swollen upon heating the product wherein it is used, simultaneously or after diluting the concentrated composition.
In the present invention the aqueous base usable as suspending medium for the starch contains at least one dissolved a_{w} depressing agent which is sorbitol.

The Suitable a_{w} depressing agent sorbitol shows the advantages of high solubility, strong water binding capacity leading to low a_{w} value as well as suitable viscosity in order to maintain the composition of the present invention in a spoonable pasty state.

The composition according to the invention is a spoonable pasty product at room temperature and at 4 °C. This is an important feature of the invention, that the composition remains spoonable also when stored in the fridge.

As a general composition, the composition according to the invention comprises from about 10 % to 30 % of water, from about 5 % to 30 % of sorbitol, from about 10 % to 40 % of starch, from about 0.1 % to 30 % of fat or oil and Maillard reaction components. According to a preferred embodiment of the invention, the composition according to the invention comprises from about 15 to 25 % of water, from about 10 to 20 % sorbitol, from about 15 to 30 % of starch, from about 5 to 15 % of fat or oil and Maillard reaction components.

The composition may also be supplemented with compounds like frozen ingredients, proteins, flavour precursors, amino acids, reducing sugars and a variety of raw materials for foodstuffs like salt, yeast and other extracts, aromas, and other ingredients used for producing soups and sauces.

The proteins are taken from the group consisting of meat ingredients and hydrolisates. The reducing sugars, the amino acids and the other ingredients are ingredients commonly used in the production of flavors.

Additionally, vegetable and/or meat extract in powder or in liquid form, or powders may be added to the present composition and for example, extracts or powder from onion, garlic, carrot, celery, tomato, beef, pork, veal, chicken, lamb, lobster, sheep, duck, fish and the like may also be added in the composition.
Suitable fat may be of vegetal or animal origin whether fully or partially hydrogenated or non-hydrogenated ones. These may be oil, shortening, butter or any suitable food grade fat. This melted fat or oil can be mixed with starch to help for starch dispersibility in the liquid mix and thus avoid lumps.

The "aqueous base" of the composition according to the present invention may coming from ingredients but can also be pure water or a combination thereof.
The present composition may also be coloured with any food grade colorant or flavouring such as caramel or process flavours, for example.

The thickener composition according to the present invention can be turned into a sauce, a sauce base just by diluting with water or any aqueous liquid, whether cold or hot, such as milk, wine, bouillon or gravy for example. Gently stirring will be necessary as well as boiling for a few minutes in order to obtain the right and homogeneous consistency.

According to a second embodiment of the invention, it concerns a pasty concentrated composition, which has not enough viscosity when diluted by the consumer and can be used per se or needs either to add starch or reduce drastically to obtain the required viscosity with a concentration below 120 g/l. This composition comprises starch dispersed in an aqueous base and an oily or fatty base, the aqueous base containing at least one dissolved a_{w} depressing agent which is sorbitol and the composition of the invention contains Maillard reaction components.

Under Maillard reaction components, we understand the same as for the first embodiment.

Starch that can be used in the composition is the same as the starch used for the first embodiment.

The starch contained in the present composition is in an unswollen state or partially swollen state, even mixed with melted fat or liquid oil, because if swollen, it would have a risk of syneresis during storage. Thus, the remainder of - or all - the starch of the composition will be swollen upon heating the product after diluting the concentrated composition. The viscosity is reached only after a drastic reduction for a concentration below 120 g/l.
In the present invention the aqueous base usable as suspending medium for the starch contains at least one dissolved a_{w} depressing agent which is sorbitol.

The composition according to the invention is a spoonable pasty product at room temperature and at 4 °C. This is an important feature of the invention, that the composition remains spoonable also when stored in the fridge.

The composition may also be supplemented with compounds like frozen ingredients, proteins, flavour precursors, amino acids, reducing sugars and a variety of raw materials for foodstuffs like salt, yeast and other extracts, aromas, and other ingredients used for producing soups and sauces.

The proteins are taken from the group consisting of meat/fish ingredients and hydrolisates. The reducing sugars, the amino acids and the other ingredients are ingredients commonly used in the production of flavors.

Additionally, vegetable and meat/fish extract in powder or in liquid form, or powders may be added to the present composition and for example, extracts or powder from onion, garlic, carrot, celery, tomato, beef, sheep, pork, chicken, lamb, veal, fish, lobster, duck and the like may also be added in the composition.
Suitable fat may be of vegetal or animal origin whether fully or partially hydrogenated or non-hydrogenated ones. These may be oil, shortening, butter or any suitable food grade fat. This melted fat or oil can be mixed with starch to help for starch dispersibility in the liquid mix and thus avoid lumps.

The "aqueous base" of the composition according to the present invention may coming from ingredients but can also be pure water or can be a combination thereof.
The present composition may also be coloured with any food grade colorant or flavouring such as caramel or process flavours, for example.

The pasty composition according to the present invention in this second embodiment can be turned into a culinary aid just by diluting with water or any aqueous liquid, whether cold or hot, such as milk, wine, bouillon or gravy for example.

The present invention concerns finally a process for the preparation of a composition according to the invention. For the preparation of the composition in the first embodiment, the water, the reducing sugars, the amino acids, the sorbitol, the starch, the oil or fat and the other dry and wet ingredients are mixed together and heated to induce the Maillard reaction and obtain the final product, wherein

the starch and the oil or fat are partially or totally added after the Maillard reaction at a temperature below the Maillard reaction temperature, that is at a temperature below 70 °C. For the composition according to the first embodiment, the temperature is around 20 °C and for the second embodiment , it is around 40-60 °C.

### Example 1

Meat extract, glucose, yeast, salt, flavors, aroma are mixed together, heated at a temperature around 90 °C during 1 hour to induce the Maillard reaction. At the end of the reaction, the temperature is lowered below 90 °C and Cremalys 516 (registered Trade-Mark for potato starch) and sunflower oil are added to this mixture to obtain the composition according to the invention being pasty and spoonable. This composition is kept in the fridge and has an Aw of 0.65.

The composition of the basic mixture is following :

| Ingredients | % |
|---|---|
| Wet ingredients | 35 |
| Glucose | 17 |
| Dry ingredients | 21 |
| Oil and starch | 27 |

Thanks to the addition of sorbitol or glucose on the wet ingredients, water molecules cannot swell starch particles and thus allows the addition of a high amount of starch in a pasty product. The final product is still spoonable. The addition of a mix oil/starch allows a good dispersability of the starch in the paste. The Maillard reaction develops additional flavours. As already said before, when stored in the fridge at 4°C, the composition of the invention is still spoonable.

### Example 2

Meat extract, glucose, yeast, salt, flavors, aroma are mixed together, heated at a temperature around 90°C during 1 hour to induce the Maillard reaction. At the end of the reaction, the temperature is lowered below 90°C and Cremalys 516 ( registered Trade-Mark for potato starch) and sunflower oil are added to this mixture to obtain the composition according to the invention being pasty and spoonable. This composition is kept in the fridge or at ambient temperature and has an Aw of 0.68.

The composition of the basic mixture is following :

| Ingredients | % |
|---|---|
| Wet ingredients | 30 |
| Dry ingredients | 50 |
| Oil and starch | 20 |

The addition of a mix oil/starch allows a good dispersability of the starch in the paste. The Maillard reaction develops additional flavours. As already said before, when stored in the fridge at 4 °C, the composition of the invention is still spoonable.

## Claims

1. Shelfstable pasty concentrated composition comprising starch dispersed in an aqueous base and an oily or fatty base,
wherein the aqueous base contains at least one dissolved a_{w} depressing agent which is sorbitol,
wherein the starch is in an unswollen state or less than 5 % in a swollen state,
wherein the starch is native starch,
wherein the composition further contains Maillard reaction components, and
wherein water is present in the amount 10 to 30 %, sorbitol is present in the amount 5 - 30 %, the starch is present in the amount 10 to 40 %, and fat or oil is present in the amount 0.1 to 30 %, such that the composition is spoonable at room temperature and at 4°C.

2. Composition according to claim 1, comprising from about 15 to 25 % water, from about 10 to 20 % sorbitol, from about 15 to 30 % starch, and from about 5 to 15 % fat or oil.

3. Composition according to any one of the claims 1 to 2, wherein the starch is selected from the group consisting of potato starch, maize starch, wheat starch and rice starch.

4. Composition according to any one of the claims 1 to 3, wherein the starch is a native potato starch.

5. Composition according to any one of the claims 1 to 4, further comprising proteins taken from the group consisting of meat ingredients and hydrolysates.

6. Process for the preparation of a composition according to one of the claims to 4, wherein water, reducing sugars, amino acids, sorbitol, starch, oil or fat are mixed together and heated to induce a Maillard reaction and obtain the final product, wherein the starch and the oil or fat are partially or totally added after the Mallard reaction at a temperature below the Maillard reaction temperature.

## Patentansprüche

1. Haltbare pastöse konzentrierte Zusammensetzung, die in einer wässrigen Basis und einer öligen oder fettigen Basis verteilte Stärke aufweist,
wobei die wässrige Basis wenigstens ein gelöstes Mittel zur Herabsetzung der Wasseraktivität enthält, das Sorbitol ist,
wobei die Stärke in einem nicht gequollenen Zustand oder weniger als 5% in einem gequollenen Zustand ist,
wobei die Stärke eine native Stärke ist,
wobei die Zusammensetzung ferner Maillard-Reaktionskomponenten enthält, und
wobei Wasser in der Menge von 10 bis 30% vorhanden ist, Sorbitol in der Menge von 5 - 30% vorhanden ist, die Stärke in der Menge von 10 und 40% vorhanden ist und Fett oder Öl in der Menge von 0,1 und 30% vorhanden ist, so dass die Zusammensetzung bei Raumtemperatur und bei 4°C löffelbar ist.

2. Zusammensetzung nach Anspruch 1, die zwischen etwa 15 bis 25% Wasser, zwischen etwa 10 und 20% Sorbitol, zwischen etwa 15 bis 30% Stärke und zwischen etwa 5 bis 15% Fett oder Öl aufweist.

3. Zusammensetzung nach einem der Ansprüche 1 bis 2, wobei die Stärke aus der Gruppe ausgewählt ist, die aus Kartoffelstärke, Maisstärke, Weizenstärke und Reisstärke besteht.

4. Zusammensetzung nach einem der Ansprüche 1 bis 2, wobei die Stärke eine native Kartoffelstärke ist.

5. Zusammensetzung nach einem der Ansprüche 1 bis 4, die ferner Proteine aufweist, die aus der Gruppe genommen sind, die aus Fleischzutaten und Hydrolysaten besteht.

6. Verfahren zur Herstellung einer Zusammensetzung nach einem der Ansprüche 1 bis 4, wobei Wasser, reduzierende Zucker, Aminosäuren, Sorbitol, Stärke, Öl oder Fett miteinander vermischt und erhitzt werden, um eine Maillard-Reaktion zu induzieren und das Endprodukt zu gewinnen, wobei die Stärke und das Öl oder Fett teilweise oder insgesamt nach der Maillard-Reaktion bei einer Temperatur unter der Maillard-Reaktionstemperatur hinzugefügt werden.

## Revendications

1. Composition concentrée pâteuse de longue conservation comprenant de l'amidon dispersé dans une base aqueuse et une base huileuse ou grasse,
dans laquelle la base aqueuse contient au moins un agent dépresseur de l'a_{w} dissous qui est le sorbitol,
dans laquelle l'amidon est dans un état non gonflé ou à moins de 5 % dans un état gonflé,
dans laquelle l'amidon est de l'amidon natif,
dans laquelle la composition contient en outre des composants d'une réaction de Maillard, et
dans laquelle de l'eau est présente dans une quantité de 10 à 30 %, du sorbitol est présent dans une quantité de 5 - 30 %, l'amidon est présent dans une quantité de 10 à 40 %, et de la matière grasse ou de l'huile est présente dans une quantité de 0,1 à 30 %, de sorte que la composition est susceptible d'être prélevée à la cuillère à température ambiante et à 4 °C.

2. Composition selon la revendication 1, comprenant environ de 15 à 25 % d'eau, environ de 10 à 20 % de sorbitol, environ de 15 à 30 % d'amidon, et environ de 5 à 15 % de matière grasse ou d'huile.

3. Composition selon l'une quelconque des revendications 1 à 2, dans laquelle l'amidon est choisi parmi le groupe constitué de fécule de pomme de terre, d'amidon de maïs, d'amidon de blé et d'amidon de riz.

4. Composition selon l'une quelconque des revendications 1 à 3, dans laquelle l'amidon est une fécule de pomme de terre native.

5. Composition selon l'une quelconque des revendications 1 à 4, comprenant en outre des protéines prises parmi le groupe constitué de matières premières camées et d'hydrolysats.

6. Procédé pour la préparation d'une composition selon l'une quelconque des revendications 1 à 4, dans lequel de l'eau, des sucres réducteurs, des acides aminés, du sorbitol, de l'amidon, de l'huile ou de la matière grasse sont mélangés ensemble et chauffés afin d'entraîner une réaction de Maillard et d'obtenir le produit final, dans lequel l'amidon et l'huile ou la matière grasse sont partiellement ou totalement ajoutés après la réaction de Maillard à une température inférieure à la température de la réaction de Maillard.
